# EUROPÄISCHE PATENTSCHRIFT

(11) **EP 4 430 953 B1**
(45) Veröffentlichungstag und Bekanntmachung des Hinweises auf die Patenterteilung: **17.09.2025**
(21) Anmeldenummer: 24154167.1
(22) Anmeldetag: 26.01.2024
(51) Int. Cl.: A23G 1/48, A23G 1/42, A23G 1/54, A23G 1/40

(54) **SCHOKOLADE UND VERFAHREN ZU DEREN HERSTELLUNG**
CHOCOLATE AND PROCESS FOR ITS PRODUCTION
CHOCOLAT ET SON PROCÉDÉ DE FABRICATION

(30) Priorität: 13.03.2023 EP 23020123; 09.06.2023 US 202318332103
(43) Veröffentlichungstag der Anmeldung: 18.09.2024
(73) Patentinhaber: Halloren Schokoladenfabrik AG, 06112 Halle/Saale (DE)
(72) Erfinder: EHLERT, Darren, 59394 Nordkirchen (DE)
(74) Vertreter: Kailuweit & Uhlemann Patentanwälte Partnerschaft mbB

(56) Entgegenhaltungen:
- CN-A- 109 699 796
- RU-C2- 2 643 721
- US-A- 4 307 126
- DATABASE GNPD [online] MINTEL; 1 February 2017 (2017-02-01), ANONYMOUS: "Coffee & Chocolate Natural Energy Bar", XP055611797, retrieved from https://www.gnpd.com/sinatra/recordpage/4593037/ Database accession no. 4593037
- DATABASE GNPD [online] MINTEL; 4 May 2010 (2010-05-04), ANONYMOUS: "Gluten-Free Energy Bar", XP093070236, retrieved from https://www.gnpd.com/sinatra/recordpage/1325845/ Database accession no. 1325845
- DATABASE GNPD [online] MINTEL; 25 August 2009 (2009-08-25), ANONYMOUS: "Whole Food Bar", XP093070243, retrieved from https://www.gnpd.com/sinatra/recordpage/1146926/ Database accession no. 1146926
- ANONYMOUS: "Schokoladenherstellung | Läckerli Huus", 20 January 2020 (2020-01-20), pages 1 - 5, XP093175844, Retrieved from the Internet <URL:https://www.laeckerli-huus.ch/de/content/im-fokus/schokoladenherstellung>
- INES ZIEMS BACKTRAUM: "Betty zeigt: Schokolade richtig temperieren [2021] | Backtraum", 21 January 2021 (2021-01-21), pages 1 - 15, XP093175859, Retrieved from the Internet <URL:https://www.backtraum.eu/blog/schokolade-richtig-temperieren>

## Beschreibung

Die Erfindung betrifft Produkte wie Schokolade, zusammengesetzte Schokolade, Praline und deren Herstellung, wobei anstelle von raffiniertem Zucker teilweise oder vollständig gefriergetrocknete Früchte als Süßungsmittel und zur Aromatisierung eingesetzt werden.

Allgemein bekannt und Stand der Technik ist, dass Schokolade je nach Sorte mehr oder weniger raffinierten Zucker enthält.

EP 3648616 A2 beschreibt Produkte wie Schokolade, Schokoladenmischungen, Pralinen usw. ohne raffinierten Zucker, wobei getrocknete Zuckerrüben teilweise oder vollständig als Süßungsmittel anstelle von raffiniertem Zucker verwendet werden.

Getrocknetes Honigpulver anstelle des raffinierten Zuckers sieht EP 3 504 980 A1 als süßenden Bestandteil von Schokolade, Pralinen und ähnlichen Produkten ohne raffinierten Zucker (Saccharose) vor, wobei die Herstellung durch teilweise oder vollständige Imprägnierung des Honigpulvers in der klebrigen flüssigen Phase oder in Milch, Milchpulver, Molke, Molkepulver und/oder Kakaopulver erfolgt.

Vorbekannt in der Schokoladenherstellung ist auch der Ersatz von raffiniertem Zucker oder anderer Süßstoffe durch die ausschließliche Verwendung von fein gemahlenen Datteln (https://www.makri-schokolade.de).

DE 20 2007 010 107 U1 betrifft Schokoladenerzeugnisse mit neuartigen Geschmacksrichtungen, insbesondere eine Schokolade mit Zusatz von Grünem Tee, wobei 0,5% bis 10% Grünteepulver und 0,2% bis 20% Grünteeblätter bezogen auf den Schokoladenanteil beigemischt werden.

Schokolade mit der Geschmacksrichtung Möhre und Sanddorn beschreibt die DE20 2007 010 106 U1, wobei die Schokolade bezogen auf den Schokoladenanteil 0,5% bis 15% Möhrenpulver sowie 0,1% bis 10% Sanddornpulver aufweist

Schließlich beschreibt die DE 20 2007 010 105 U1 eine Schokolade mit der Geschmacksrichtung Rosmarin und Zitrone, wobei die Schokolade bezogen auf den Schokoladenanteil 0,25% bis 15% Zitronenpulver sowie 0,01% bis 5% ätherisches Rosmarinöl aufweist.

US 4 307 126 A beschreibt eine Fruchtschokolade, die mindestens eine Sorte getrockneter oder kandierter Früchte in Form gleichmäßig verteilter feiner Partikel enthält. Die Herstellung erfolgt durch Einfrieren der getrockneten oder kandierten Früchte zusammen mit mindestens einer Sorte Speiseöl oder -fett oder einem öl- oder fetthaltigen Lebensmittel, Pulverisieren dieser gefrorenen Mischung und Dispergieren der resultierenden feinen Partikel in einer Schokoladenbasis, um eine fruchthaltige Schokoladenpaste zu bilden. Das Vorhandensein von Öl oder Fett verhindert, dass die feinen Fruchtpartikel klebrige Agglomerate bilden, sodass eine ausreichende Menge getrockneter oder kandierter Früchte in die Schokolade eingearbeitet werden kann, um sowohl den kräftigen Geschmack und das Aroma der Früchte als auch eine gute Süße zu erzielen, wenn die Schokolade weder Zucker noch einen Zuckerersatz enthält. US 4 307 126 A beschreibt die Verwendung von gefriergetrockneten, pulverisierten Früchten, wie Apfel, Banane Dattel, Feige, Kaki, Pflaume, Sultaninen und Rosinen; oder kandierten Früchten, wie Zitrusfrüchten, Fruchtfleisch und/oder Schale, von Orange und Zitrone, kandierter Apfel, kandierter Ananas und kandierter Kirsche.

CN 109 699 796 A beschreibt ernährungsphysiologisch funktionelle Lebensmittel und betrifft insbesondere eine nährstoffreiche Fruchtschokolade und Schokoladensauce mit therapeutischer Wirkung für die Gesundheitsfürsorge sowie ein Zubereitungsverfahren für die Schokolade und Schokoladensauce. CN 109 699 796 A offenbart eine Fruchtschokolade, bestehend aus 5-10 Teilen bzw. 16-30 Teilen Fruchtpulver; 6-16 Teilen Vollmilchpulver; 36-43 Teilen Kakaobutter; 0,7-1,2 Teilen Lecithin; 25-35 Teilen Trehalose und 2-4 Teilen Molkepulver. Das Fruchtpulver umfasst mindestens ein Pulver ausgewählt aus Birnenpulver, Bananenpulver, Mangopulver, Apfelpulver, Cantaloupe-Pulver und Erdbeerpulver.

RU 2 643 721 C2 beschreibt einen Energieriegel bestehend aus Milchschokoladenmasse oder weißer Schokolade und Himbeeren, wobei der Gehalt an Milchschokoladenmasse oder weißer Schokolade 75-96 Gew.-% und an Himbeerbeeren 4-25 Gew.-% beträgt. Die Herstellung umfasst das Bereitstellen der Schokoladenmasse, Schmelzen der Schokoladenmasse und Einbringen von himbeergetrockneten Himbeeren bei einer Temperatur von nicht mehr als 45°C.

Der Erfindung liegt die Aufgabe zugrunde Schokolade oder Schokoladenerzeugnisse, bereitzustellen, welche keinen raffinierten Zucker aufweisen.

Erfindungsgemäß wird die Aufgabe durch die Schokolade und das Verfahren zu deren Herstellung gemäß den unabhängigen Ansprüchen gelöst. Vorteilhafte Ausgestaltungen der Erfindung sind in den abhängigen Ansprüchen angegeben.

Die vorliegende Erfindung betrifft ein Verfahren zum Süßen ungesüßter Schokolade mittels Zugabe von fein gemahlenen, gefriergetrockneten Bananen, Ananas und Äpfeln. Auf die zusätzliche Zugabe von Zucker oder künstlichen Süßstoffen wird verzichtet. Vorteilhaft erfolgt dadurch eine Reduzierung des Zuckergehaltes in der Schokolade.

Raffinierter Zucker wird mit vorbenannten Ausnahmen weiterhin traditionell bei der Herstellung von Schokolade für Tafeln, Hohlkörper, Naps (Napolitains) oder als Überzug den ungesüßten Kakaobestandteilen zugefügt. Der Zuckeranteil beträgt hierbei bis zu 50 % der fertigen Schokoladenmasse.

Unter dem Begriff "Schokolade" wird ein festes oder flüssiges Nahrungs- und Genussmittel umfassend Kakaoerzeugnisse, insbesondere Kakaomasse und Kakaobutter, verstanden. Zweckmäßig umfasst der Begriff Schokolade auch zusammengesetzte Schokolade, Pralinen, Konfekt und Kuvertüren.

Die üblichen Komponenten einer handelsüblichen Schokolade sind ungesüßte Schokolade, Zucker, Kakaopulver, Kakaobutter und Lecithin. Für Milchschokolade wird zusätzlich Milch oder Milchpulver zugesetzt.

Die vorliegende Erfindung betrifft dagegen die Herstellung von Schokolade, welcher im Fertigungsprozess statt raffiniertem Zucker oder künstlicher Süßstoffe außer Dattelpulver gefriergetrocknete Bananen, gefriergetrocknete Ananas und gefriergetrocknete Äpfel zur Süßung sowie zur Optimierung der Konsistenz zugesetzt werden. Erfindungsgemäß werden keine Säfte, Konzentrate und keine gezuckerten oder kandierten Früchte verwendet. Durch die erfindungsgemäße Kombination von gefriergetrockneten Früchten (Ananas, Apfel, Banane) wird vorteilhaft eine Schokolade erhalten, welche einen verbesserten Geschmack im Vergleich zur Verwendung von Datteln aufweist, insbesondere einen verringerten bitteren Geschmack und eine verbesserte olfaktorische Wahrnehmung. Vorteilhaft weist die Schokolade durch die erfindungsgemäße Kombination von gefriergetrockneten Früchten (Ananas, Apfel, Banane) einen intensiven, reinen und unverfälschten Schokoladengeschmack auf, wobei überraschenderweise kein merklicher Fruchtgeschmack vorliegt. Zweckmäßig sind die gefriergetrockneten Früchte (Ananas, Apfel, Banane) gleichmäßig in der Schokolade verteilt, wodurch die Schokolade vorteilhaft einen zarten Schmelz und ein olfaktorisches und gustatorisches Schokoladenerlebnis bietet.

Vorteilhaft wird durch die Verwendung von getrockneten Datteln die Konsistenz der Schokolade verbessert, insbesondere dienen die Datteln als Füllstoff und Klebstoff.

Der erfindungsgemäße Zusatz der benannten Früchte Banane, Ananas und Apfel erfolgt dabei in Kombination.

Vorteilhaft wird der süße Geschmack der Schokolade durch die natürlich in den verwendeten Früchten vorhandenen Inhaltsstoffe erreicht. Die in den gefriergetrockneten Früchten Banane, Ananas und Apfel enthaltene Fructose als Einfachzucker ist deutlich süßer als der Glukoseanteil im raffinierten Zucker. Die zum Süßen der Schokolade verwendete Menge kann somit deutlich reduziert werden. Diese Reduktion greift den Trend auf, sich gesund und zuckerorientiert zu ernähren. Vorteilhaft wird durch die Verwendung von gefriergetrockneten Früchten weiterhin eine Erhöhung des Ballaststoffgehalts erreicht.

Erfindungsgemäß umfasst die Schokolade
i. Kakaomasse,
ii. Fett,
iii. Dattelpulver,
iv. Pulver aus gefriergetrockneten Bananen, aus gefriergetrockneter Ananas und aus gefriergetrockneten Äpfeln.

Erfindungsgemäß hat das Pulver aus gefriergetrockneten Bananen, aus gefriergetrockneter Ananas und aus gefriergetrockneten Äpfeln zusammen einen Gehalt im Bereich von 0,3 Gew.-% bis 30 Gew.-% bezogen auf die Gesamtmasse der Schokolade, bevorzugt einen Gehalt im Bereich von 9,85 Gew.-% bis 12,04 Gew.-% bezogen auf die Gesamtmasse der Schokolade.

In Ausführungsformen weisen die pulverisierten getrockneten Datteln einen Gehalt im Bereich von 0,1 Gew.-% bis 24 Gew.-% bezogen auf die Gesamtmasse der Schokolade, bevorzugt einen Gehalt im Bereich von 7,88 Gew.-% bis 9,64 Gew.-% bezogen auf die Gesamtmasse der Schokolade, auf.

In Ausführungsformen weisen die pulverisierten getrockneten Datteln, die pulverisierte gefriergetrocknete Ananas, der pulverisierte gefriergetrocknete Apfel und/oder die pulverisierten gefriergetrockneten Bananen eine Partikelgröße von maximal 50 µm auf.

In Ausführungsformen ist die Schokolade weiße Schokolade, Milchschokolade oder Bitterschokolade, bevorzugt Milchschokolade oder Bitterschokolade, besonders bevorzugt Bitterschokolade.

In Ausführungsformen enthält die Schokolade 12 Gew.-% bis 80 Gew.-% ungesüßte Kakaomasse 5 Gew.-% bis 40 Gew.-% Kakaobutter, 0,1 Gew.-% bis 24 Gew.-% Dattelpulver, 0,1 Gew.-% bis 10 Gew.-% gefriergetrockneten Bananenpulvers, 0,1 Gew.-% bis 10 Gew.-% gefriergetrockneten Ananaspulvers und 0,1 Gew.-% bis 10 Gew.-% gefriergetrockneten Apfelpulvers bezogen auf die Gesamtmasse der Schokolade.

In Ausführungsformen enthält die Schokolade 25 Gew.-% bis 80 Gew.-% ungesüßte Kakaomasse 5 Gew.-% bis 35 Gew.-% Kakaobutter, 0,1 Gew.-% bis 24 Gew.-% Dattelpulver, 0,1 Gew.-% bis 10 Gew.-% gefriergetrockneten Bananenpulvers, 0,1 Gew.-% bis 10 Gew.-% gefriergetrockneten Ananaspulvers und 0,1 Gew.-% bis 10 Gew.-% gefriergetrockneten Apfelpulvers bezogen auf die Gesamtmasse der Schokolade.

Darüber hinaus können sich durch die Verwendung weiterer unterschiedlicher, gefriergetrockneter Früchte oder Mischungen auch neue und einzigartige Geschmackserlebnisse eröffnen. So ist bei Bedarf keine weitere Zugabe von natürlichen oder künstlichen fruchtigen Aromen notwendig.

Bei der Gefriertrocknung bleibt der Geschmack der gefriergetrockneten Früchte weitgehend erhalten. Dies bietet bei der finalen Schokoladenherstellung die einzigartige Möglichkeit, den Geschmack des Endproduktes sehr variabel zu beeinflussen. Je nach verwendeter Fruchtsorte können so der Schokolade Geschmacksvarianten hinzugefügt werden, die gustatorisch die vielfältigsten Fruchtnuancen ermöglichen. Gleiches gilt natürlich auch für fein abgestimmte Fruchtmischungen. Daneben kann hierbei auch selektiv die Geschmacksintensität der jeweiligen Fruchtnoten angepasst werden, um so dem Endprodukt den gewünschten Charakter zu verleihen. Darüber hinaus ist es mit speziellen Früchten bzw. Fruchtmischungen auch möglich, nur die entsprechende Süße hinzuzufügen, ohne das Geschmacksgefüge der Schokolade zu verändern. Die Schokolade bleibt in diesem Fall in Bezug auf die zugesetzten Früchte weitestgehend geschmacksneutral.

Ein weiterer, ernährungsphysiologischer Vorteil der Erfindung ist, dass durch die Gefriertrocknung im Unterschied zur Verwendung von herkömmlich getrockneten Zugaben oder dem Zusatz von Kristallzucker die wertvollen Inhaltsstoffe der Früchte, wie z. B. Vitamine und Ballaststoffe, erhalten bleiben.

Im Gegensatz zur Verwendung von herkömmlich getrockneten Zugaben oder dem Zusatz von Zucker ist der Nährwert gefriergetrockneter Früchte geringer. Je nach verwendeter Frucht und deren Anteilen liegt dieser bis zu 10 % unter dem Nährwert von herkömmlichem Rübenzucker. Dies ist vor allem dem deutlich geringeren Anteil an Kohlenhydraten in gefriergetrockneten Früchten zu verdanken.

Ein weiterer ernährungsphysiologischer Vorteil der Erfindung im Vergleich zur Verwendung von herkömmlich getrockneten Zugaben oder dem Zusatz von Zucker ist der höhere Ballaststoffanteil der gefriergetrockneten Früchte Banane, Ananas, Apfel. Ballaststoffe können Übergewicht entgegenwirken, da sie für ein langanhaltendes Sättigungsgefühl sorgen. Die erfindungsgemäße Schokolade besteht aus ungesüßter Kakaomasse, Kakaobutter, Dattelpulver und gefriergetrocknetem Pulver aus Bananen, Ananas und Äpfeln zusammen. Unter dem Begriff "ungesüßte Kakaomasse" wird ein Produkt erhalten aus Kakaobohnen verstanden, welches durch Rösten von Kakaobohnen, Entschalen der Kakaobohnen, Zerhacken der Kakaobohnen, Abtrennen der Kakaoschalen und Zermahlen erhalten wird.

In Ausführungsformen umfasst die erfindungsgemäße Schokolade, bezogen auf das Gesamtgewicht der Schokolade, die folgenden Bestandteile:
- 52,55 Gew.-% bis 64,23 Gew.-% ungesüßte Kakaomasse insbesondere 52,55; 53; 53,5; 54; 54,5; 55; 55,5; 56; 56,5; 57; 57,5; 58; 58,5; 59; 59,5; 60; 60,5; 61; 61,5; 62; 62,5; 63; 63,5; 64 oder 64,23 Gew.-% ungesüßte Kakaomasse
- 19,71 Gew.-% bis 24,09 Gew.-% Kakaobutter, insbesondere 19,71; 19,8; 19,9; 20,0; 20,1; 20,2; 20,3; 20,4; 20,5; 20,6; 20,7; 20,8; 20,9; 21,0; 21,1; 21,2; 21,3; 21,4; 21,5; 21,6; 21,7; 21,8; 21,9; 22,0; 22,1; 22,2; 22,3; 22,4; 22,5; 22,6; 22,7; 22,8; 22,9; 23,0; 23,1; 23,2; 23,3; 23,4; 23,5; 23,6; 23,7; 23,8; 23,9; 24,0 oder 24,09 Gew.-% Kakaobutter,
- 7,88 Gew.-% bis 9,64 Gew.-% Dattelpulver, insbesondere 7,88; 7,9; 8,0; 8,1; 8,2; 8,3; 8,4; 8,5; 8,6; 8,7; 8,8; 8,9; 9,0; 9,1; 9,2; 9,3; 9,4; 9,5; 9,6 oder 9,64 Gew.-% Dattelpulver, und
- 9,85 Gew.-% bis 12,04 Gew.-% einer Kombination aus Pulver bestehend aus gefriergetrockneten Bananen, Pulver bestehend aus gefriergetrockneter Ananas und Pulver bestehend aus gefriergetrockneten Äpfeln, insbesondere 9,85; 9,9; 10,0; 10,1; 10,2; 10,3; 10,4; 10,5; 10,6; 10,7; 10,8; 10,9; 11,0; 11,1; 11,2; 11,3; 11,4; 11,5; 11,6; 11,7; 11,8; 11,9; 12,0 oder 12,04 Gew.-%.

In Ausführungsformen umfasst die erfindungsgemäße Schokolade jeweils 3,28 Gew.-% bis 4,01 Gew.-%, insbesondere 3,28; 3,3; 3,4; 3,5; 3,6; 3,7; 3,8; 3,9; 4,0 oder 4,01 Gew.-%, jedes Pulvers bestehend aus gefriergetrockneten Bananen, Ananas und Äpfeln, wobei die drei Pulver in gleichen oder unterschiedlichen Mengen vorhanden sein können.

In Ausführungsformen enthält die Schokolade 58,39 Gew.-% ungesüßte Kakaomasse 21,90 Gew.-% Kakaobutter, 8,76 Gew.-% Dattelpulver und 10,95 Gew.-% einer Mischung aus gefriergetrockneten Bananenpulvers, gefriergetrockneten Ananaspulvers und gefriergetrockneten Apfelpulvers bezogen auf die Gesamtmasse der Schokolade.

In Ausführungsformen enthält die Schokolade 58,39 Gew.-% ungesüßte Kakaomasse 21,90 Gew.-% Kakaobutter, 8,76 Gew.-% Dattelpulver, 3,65 Gew.-% gefriergetrocknetes Bananenpulver, 3,65 Gew.-% gefriergetrocknetes Ananaspulver und 3,65 Gew.-% gefriergetrocknetes Apfelpulver bezogen auf die Gesamtmasse der Schokolade.

In Ausführungsformen enthält die Schokolade 44 Gew.-% ungesüßte Kakaomasse 17 Gew.-% Kakaobutter, 9 Gew.-% Dattelpulver und 10 Gew.-% gefriergetrocknetes Bananenpulver, 10 Gew.-% gefriergetrocknetes Ananaspulver und 10 Gew.-% gefriergetrocknetes Apfelpulver bezogen auf die Gesamtmasse der Schokolade.

In Ausführungsformen enthält die Schokolade weiterhin Milchpulver und/oder natürliches Vanillearoma.

In Ausführungsformen enthält die Schokolade die Schokolade 12 Gew.-% bis 25 Gew.-% ungesüßte Kakaomasse 5 Gew.-% bis 40 Gew.-% Kakaobutter, 7 Gew.-% bis 24 Gew.-% Dattelpulver, 3 Gew.-% bis 10 Gew.-% gefriergetrockneten Bananenpulvers, 3 Gew.-% bis 10 Gew.-% gefriergetrockneten Ananaspulvers, 3 Gew.-% bis 10 Gew.-% gefriergetrockneten Apfelpulvers, 7 Gew.-% bis 20 Gew.-% Milchpulver und 0 Gew.-% bis 1 Gew.-% natürliches Vanillearoma bezogen auf die Gesamtmasse der Schokolade.

Ein weiterer Aspekt der Erfindung betrifft ein Verfahren zur Herstellung einer erfindungsgemäßen Schokolade umfassend die folgenden Schritte
a) Bereitstellen von Kakaomasse, Fett, pulverisierten getrockneten Datteln, pulverisierter gefriergetrockneter Ananas, pulverisiertem gefriergetrocknetem Apfel und pulverisierter gefriergetrockneter Banane,
b) Zermahlen der Kakaomasse mit dem Fett, und
c) Mischen der pulverisierten getrockneten Datteln, der pulverisierten gefriergetrockneten Ananas, des pulverisierten gefriergetrockneten Apfels und der pulverisierten gefriergetrockneten Bananen mit der Kakaomasse, wobei das Zermahlen in Schritt b) und das Mischen in Schritt c) zumindest teilweise als Conchieren erfolgt.

In Ausführungsform erfolgt das Bereitstellen der Kakaomasse in Schritt a) durch Rösten von Kakaobohnen, Entschalen der Kakaobohnen, Zerhacken der Kakaobohnen und Abtrennen der Kakaoschalen zum Erhalt von Kakaonibs und Zermahlen der Kakaonibs zum Erhalt der Kakaomasse.

In Ausführungsformen ist das Fett ein pflanzliches Fett und/oder ein Fett erhalten aus Milch. In Ausführungsformen ist das pflanzliche Fett Palmöl, Sheabutter, Mangokernbutter, Kakaobutter und/oder Borneo-Talg, bevorzugt Kakaobutter.

Zweckmäßig erfolgt das Zermahlen der Kakaomasse und des Fetts bis eine flüssige, insbesondere zähflüssige, Konsistenz erhalten wird. Vorteilhaft werden durch Schritt b) große Partikel in der Schokoladenmasse entfernt.

Unter dem Begriff "Conchieren" wird das Zermahlen und Vermischen bei erhöhten Temperaturen, insbesondere bei einer Temperatur im Bereich von 35°C bis 90°C, verstanden.

In Ausführungsformen erfolgt das Zermahlen in Schritt b) und/oder das Mischen in Schritt c) bei einer Temperatur im Bereich von 35°C bis 90°C, bevorzugt 35°C bis 50°C, besonders 35°C bis 40°C.

In Ausführungsformen erfolgt das Zermahlen in Schritt b) für eine Dauer im Bereich von 1 h bis 80 h, bevorzugt 12 bis 48 h.

In Ausführungsformen erfolgt das Zermahlen in Schritt b) in einer Kugelmühle oder einer Steinschleifmaschine.

In Ausführungsformen erfolgt nach Schritt b) eine Abtrennung von groben Partikeln, bevorzugt ein Sieben.

In Ausführungsformen werden die pulverisierten getrockneten Datteln, die pulverisierte gefriergetrocknete Ananas, der pulverisierte gefriergetrocknete Apfel und/oder die pulverisierten gefriergetrockneten Bananen mit einer Partikelgröße von maximal 50 µm bereitgestellt. Vorteilhaft ermöglicht die Verwendung der pulverisierten getrockneten Früchte mit einer Partikelgröße von maximal 50 µm die Herstellung einer Schokolade mit einem Mundgefühl, dass einer mit raffiniertem Zucker hergestellten Schokolade entspricht.

In Ausführungsform erfolgt das Mischen in Schritt c) unter den gleichen Bedingungen wie Schritt b). Vorteilhaft erfolgt das Mischen der getrockneten Datteln, gefriergetrockneter Ananas, gefriergetrocknetem Apfel und gefriergetrockneter Banane mit der Kakaomasse während des Conchierens.

In Ausführungsform erfolgt in Schritt c) das Mischen mit Milchpulver und/oder natürlichem Vanillearoma.

In Ausführungsformen erfolgt nach Schritt c) eine Temperierung, eine Formgebung und/oder ein Abkühlen der Schokolade.

Unter dem Begriff "Temperierung" wird erneutes Erwärmen der Schokolade nach dem Abkühlen verstanden, wobei niedrig schmelzende Kristalle geschmolzen werden. Zweckmäßig erfolgt nach der Temperierung ein Auskühlen der Schokolade.

In Ausführungsformen erfolgt bei der Temperierung eine Abkühlung auf unter 29°C und eine Temperaturerhöhung auf 30°C bis 32°C. Zweckmäßig erfolgt eine Veränderung der Temperatur bei der Temperierung entsprechend der Schokoladensorte.

In Ausführungsformen erfolgt bei der Formgebung die Herstellung von Tafeln, Hohlkörpern, Naps (Napolitains) oder Überzügen mit der erfindungsgemäßen Schokolade.

Für die Realisierung der Erfindung ist es auch zweckmäßig, die vorbeschriebenen erfindungsgemäßen Ausgestaltungen, Ausführungsformen und Merkmale der Ansprüche miteinander zu kombinieren.

Nachfolgend soll die Erfindung anhand eines Ausführungsbeispiels eingehender erläutert werden. Das Ausführungsbeispiel bezieht sich auf eine Schokolade und das Verfahren zu deren Herstellung und soll dabei die Erfindung beschreiben, ohne diese zu beschränken.

**Tab. 1 Nährwertinformationen der erfindungsgemäß eingesetzten, gefriergetrockneten Früchte im Vergleich zu herkömmlichem Zucker.**

| | Zucker | Gefriergetrocknet es Apfelpulver | Gefriergetrocknet es Ananaspulver | Gefriergetrocknet es Bananenpulver |
|---|---|---|---|---|
| Energiewert KCAL | 402 kcal | 395 kcal | 376 kcal | 377 kcal |
| Energiewert | 1.683 kj | 1.652 kj | 1.591 kj | 1.576 kj |
| Fett | 0,0 g | 0,8 g | 0,85 g | 1,2 g |
| Davon gesättigte Fettsäuren | 0,0 g | 0,0 g | 0,06 g | 0,4 g |
| Kohlenhydrate | 99,0 g | 88,5 g | 83,21 g | 80,08 g |
| Davon Zucker | 99,0 g | 77,7 g | 69,94 g | 48,8 g |
| Ballaststoffe | 0,0 g | 10,0 g | 9,94 g | 10,4 g |
| Proteine | 0,0 g | 2,3 g | 3,83 g | 4,4 g |
| Salz | 0,0 g | 0,01 g | 0,02 g | 0,0 g |

Die erfindungsgemäße Schokolade setzt sich im Einzelnen aus ungesüßter Kakaomasse, Kakaobutter, Dattelpulver und gefriergetrocknetem Pulver aus Bananen, Ananas und Äpfeln zusammen.

Im Folgenden wird die anteilige Zusammensetzung der erfindungsgemäßen Schokolade in einer konkreten Ausführungsform dargestellt (siehe **Tab. 2**).

**Tab. 2 Anteilige Zusammensetzung der erfindungsgemäßen Schokolade.**

| | | |
|---|---|---|
| Ungesüßte Kakaomasse | 400,00 | Gramm |
| Kakaobutter | 150,00 | Gramm |
| Dattelpulver | 60,00 | Gramm |
| | | |
| Pulver aus gefriergetrockneten Bananen | 25,00 | Gramm |
| Pulver aus gefriergetrockneter Ananas | 25,00 | Gramm |
| Pulver aus gefriergetrockneten Äpfeln | 25,00 | Gramm |

Somit enthält die Erfindung ca. 80% Kakaomasse und ca. 20 % gefriergetrocknete Früchte. Vorbehaltlich neuer Verwendungszwecke oder anderer Geschmacksrichtungen können die Anteile oder aber auch die Art der benannten Früchte variieren, kombiniert oder einzdn eingesetzt werden.

Die grundlegenden Verfahrensschritte zur Herstellung der erfindungsgemäßen Schokolade stellen sich wie folgt dar: Die gefriergetrockneten Früchte werden gemeinsam mit der ungesüßten Kakaomasse und der Kakaobutter mittels einer Kugelmühle oder einer Steinschleifmaschine gemahlen. Das Mahlen erfolgt so lange, bis die einzelnen Partikel der Massen so fein sind, dass diese im Mund nicht mehr als Partikel wahrgenommen werden. Die so gemahlene Masse wird anschließend noch einmal durch ein feines Sieb gestrichen, um sicherzustellen, dass keine fühlbaren Partikel mehr in der Masse enthalten sind.

Nach diesem Prozess wird die fertige Schokolade für die direkte Weiterverarbeitung bzw. zur Aufbewahrung entsprechend temperiert.

In der Übersicht ergibt sich folgendes Verfahrensschema:
Rohmaterialien -> Mahlen in Kugelmühle oder Steinschleifmaschine
Sieb
Temperieren
Aufbewahrung/Lagerung der flüssigen Schokolade
Verarbeitung / Weiterverkauf

## Patentansprüche

1. Schokolade ohne raffinierten Zucker, umfassend
i. Kakaomasse,
ii. Fett,
iii. Dattelpulver,
iv. Pulver aus gefriergetrockneten Bananen, aus gefriergetrockneter Ananas und aus gefriergetrockneten Äpfeln,
wobei das Pulver aus gefriergetrockneten Bananen, aus gefriergetrockneter Ananas und aus gefriergetrockneten Äpfeln zusammen einen Gehalt im Bereich von 0,3 Gew.-% bis 30 Gew.-% bezogen auf die Gesamtmasse der Schokolade aufweist.

2. Schokolade nach Anspruch 1, **dadurch gekennzeichnet, dass** die Schokolade weiße Schokolade, Milchschokolade oder Bitterschokolade ist.

3. Schokolade nach Anspruch 1 oder 2, **dadurch gekennzeichnet, dass** die Schokolade 12 Gew.-% bis 80 Gew.-% ungesüßte Kakaomasse, 5 Gew.-% bis 40 Gew.-% Kakaobutter, 0,1 Gew.-% bis 24 Gew.-% Dattelpulver, 0,1 Gew.-% bis 10 Gew.-% gefriergetrockneten Bananenpulvers, 0,1 Gew.-% bis 10 Gew.-% gefriergetrockneten Ananaspulvers und 0,1 Gew.-% bis 10 Gew.-% gefriergetrockneten Apfelpulvers bezogen auf die Gesamtmasse der Schokolade enthält.

4. Schokolade nach einem der Ansprüche 1 bis 3, **dadurch gekennzeichnet, dass** die Schokolade 25 Gew.-% bis 80 Gew.-% ungesüßte Kakaomasse, 5 Gew.-% bis 35 Gew.-% Kakaobutter, 0,1 Gew.-% bis 24 Gew.-% Dattelpulver, 0,1 Gew.-% bis 10 Gew.-% gefriergetrockneten Bananenpulvers, 0,1 Gew.-% bis 10 Gew.-% gefriergetrockneten Ananaspulvers und 0,1 Gew.-% bis 10 Gew.-% gefriergetrockneten Apfelpulvers bezogen auf die Gesamtmasse der Schokolade enthält.

5. Schokolade nach Anspruch 1 oder 2, **dadurch gekennzeichnet, dass** die Schokolade 52,55 Gew.-% bis 64,23 Gew.-% ungesüßte Kakaomasse, 19,71 Gew.-% bis 24,09 Gew.-% Kakaobutter, 7,88 Gew.-% bis 9,64 Gew.-% Dattelpulver und 9,85 Gew.-% bis 12,04 Gew.-% einer Kombination aus Pulver aus gefriergetrockneten Bananen, aus gefriergetrockneter Ananas und aus gefriergetrockneten Äpfeln bezogen auf die Gesamtmasse der Schokolade enthält.

6. Schokolade nach einem der Ansprüche 1 bis 5, **dadurch gekennzeichnet, dass** die Schokolade 58,39 Gew.-% ungesüßte Kakaomasse, 21,90 Gew.-% Kakaobutter, 8,76 Gew.-% Dattelpulver und 10,95 Gew.-% einer Mischung aus gefriergetrockneten Bananenpulvers, gefriergetrockneten Ananaspulvers und gefriergetrockneten Apfelpulvers bezogen auf die Gesamtmasse der Schokolade enthält.

7. Schokolade nach einem der Ansprüche 1 bis 6, **dadurch gekennzeichnet, dass** die Schokolade 58,39 Gew.-% ungesüßte Kakaomasse, 21,90 Gew.-% Kakaobutter, 8,76 Gew.-% Dattelpulver, 3,65 Gew.-% gefriergetrocknetes Bananenpulver, 3,65 Gew.-% gefriergetrocknetes Ananaspulver und 3,65 Gew.-% gefriergetrocknetes Apfelpulver bezogen auf die Gesamtmasse der Schokolade enthält.

8. Schokolade nach einem der Ansprüche 1 bis 4, **dadurch gekennzeichnet, dass** die Schokolade 44 Gew.-% ungesüßte Kakaomasse, 17 Gew.-% Kakaobutter, 9 Gew.-% Dattelpulver und 10 Gew.-% gefriergetrocknetes Bananenpulver, 10 Gew.-% gefriergetrocknetes Ananaspulver und 10 Gew.-% gefriergetrocknetes Apfelpulver bezogen auf die Gesamtmasse der Schokolade enthält.

9. Schokolade nach einem der Ansprüche 1 bis 4 umfassend weiterhin Milchpulver und/oder natürliches Vanillearoma.

10. Schokolade nach einem der Ansprüche 1 bis 4 oder 9, **dadurch gekennzeichnet, dass** die Schokolade 12 Gew.-% bis 25 Gew.-% ungesüßte Kakaomasse, 5 Gew.-% bis 40 Gew.-% Kakaobutter, 7 Gew.-% bis 24 Gew.-% Dattelpulver, 3 Gew.-% bis 10 Gew.-% gefriergetrockneten Bananenpulvers, 3 Gew.-% bis 10 Gew.-% gefriergetrockneten Ananaspulvers, 3 Gew.-% bis 10 Gew.-% gefriergetrockneten Apfelpulvers, 7 Gew.-% bis 20 Gew.-% Milchpulver und 0 Gew.-% bis 1 Gew.-% natürliches Vanillearoma bezogen auf die Gesamtmasse der Schokolade enthält.

11. Verfahren zur Herstellung einer Schokolade nach einem der Ansprüche 1 bis 10 umfassen die folgenden Schritte:
a) Bereitstellen von Kakaomasse, Fett, pulverisierten getrockneten Datteln, pulverisierter gefriergetrockneter Ananas, pulverisiertem gefriergetrocknetem Apfel und pulverisierter gefriergetrockneter Banane,
b) Mahlen der Kakaomasse mit dem Fett, und
c) Mischen der pulverisierten getrockneten Datteln, der pulverisierten gefriergetrockneten Ananas, des pulverisierten gefriergetrockneten Apfels und der pulverisierten gefriergetrockneten Bananen mit der Kakaomasse,
wobei das Zermahlen in Schritt b) und das Mischen in Schritt c) zumindest teilweise als Conchieren erfolgt.

12. Verfahren nach Anspruch 11, **dadurch gekennzeichnet, dass** Schritt b) und/oder Schritt c) bei einer Temperatur im Bereich von 35°C bis 40°C erfolgen.

13. Verfahren nach Anspruch 11 oder 12, **dadurch gekennzeichnet, dass** in Schritt c) weiterhin Milchpulver und/oder natürliches Vanillearoma vermischt wird.

14. Verfahren nach einem der Ansprüche 11 bis 13, **dadurch gekennzeichnet, dass** nach Schritt c) eine Temperierung, eine Formgebung und/oder ein Abkühlen der Schokolade erfolgt.

## Claims

1. Chocolate without refined sugar, comprising
i. cocoa mass,
ii. fat,
iii. date powder,
iv. powder made from freeze-dried bananas, freeze-dried pineapple, and freeze-dried apples,
wherein the powder made from freeze-dried bananas, freeze-dried pineapple, and freeze-dried apples together has a content in the range of 0.3 wt% to 30 wt% based on the total mass of the chocolate.

2. Chocolate according to claim 1, **characterized in that** the chocolate is white chocolate, milk chocolate, or dark chocolate.

3. Chocolate according to claim 1 or 2, **characterized in that** the chocolate comprises 12 wt% to 80 wt% unsweetened cocoa mass, 5 wt% to 40 wt% cocoa butter, 0.1 wt% to 24 wt% date powder, 0.1 wt% to 10 wt% freeze-dried banana powder, 0.1 wt% to 10 wt% freeze-dried pineapple powder, and 0.1 wt% to 10 wt% freeze-dried apple powder, based on the total mass of the chocolate.

4. Chocolate according to any of claims 1 to 3, **characterized in that** the chocolate comprises 25 wt% to 80 wt% unsweetened cocoa mass, 5 wt% to 35 wt% cocoa butter, 0.1 wt% to 24 wt% date powder, 0.1 wt% to 10 wt% freeze-dried banana powder, 0.1 wt% to 10 wt% freeze-dried pineapple powder, and 0.1 wt% to 10 wt% freeze-dried apple powder, based on the total mass of the chocolate.

5. Chocolate according to claim 1 or 2, **characterized in that** the chocolate comprises 52.55 wt% to 64.23 wt% unsweetened cocoa mass, 19.71 wt% to 24.09 wt% cocoa butter, 7.88 wt% to 9.64 wt% date powder, and 9.85 wt% to 12.04 wt% of a combination of freeze-dried banana powder, freeze-dried pineapple powder, and freeze-dried apple powder, based on the total mass of the chocolate.

6. Chocolate according to any of claims 1 to 5, **characterized in that** the chocolate comprises 58.39 wt% unsweetened cocoa mass, 21.90 wt% cocoa butter, 8.76 wt% date powder, and 10.95 wt% of a mixture of freeze-dried banana powder, freeze-dried pineapple powder, and freeze-dried apple powder, based on the total mass of the chocolate.

7. Chocolate according to any of claims 1 to 6, **characterized in that** the chocolate comprises 58.39 wt% unsweetened cocoa mass, 21.90 wt% cocoa butter, 8.76 wt% date powder, 3.65 wt% freeze-dried banana powder, 3.65 wt% freeze-dried pineapple powder, and 3.65 wt% freeze-dried apple powder, based on the total mass of the chocolate.

8. Chocolate according to any of claims 1 to 4, **characterized in that** the chocolate comprises 44 wt% unsweetened cocoa mass, 17 wt% cocoa butter, 9 wt% date powder and 10 wt% freeze-dried banana powder, 10 wt% freeze-dried pineapple powder, and 10 wt% freeze-dried apple powder, based on the total mass of the chocolate.

9. Chocolate according to any of claims 1 to 4, further comprising milk powder and/or natural vanilla flavoring.

10. Chocolate according to any of claims 1 to 4 or 9, **characterized in that** the chocolate comprises 12 wt% to 25 wt% unsweetened cocoa mass, 5 wt% to 40 wt% cocoa butter, 7 wt% to 24 wt% date powder, 3 wt% to 10wt% freeze-dried banana powder, 3 wt% to 10 wt% freeze-dried pineapple powder, 3 wt% to 10 wt% freeze-dried apple powder, 7 wt% to 20 wt% milk powder, and 0 wt% to 1 wt% natural vanilla flavoring based on the total mass of the chocolate.

11. A method for producing chocolate according to any of claims 1 to 10 comprising the following steps:
a) providing cocoa mass, fat, powdered dried dates, powdered freeze-dried pineapple, powdered freeze-dried apple, and powdered freeze-dried banana,
b) grinding the cocoa mass with the fat, and
c) mixing the powdered dried dates, powdered freeze-dried pineapple, powdered freeze-dried apple, and powdered freeze-dried banana with the cocoa mass,
wherein the grinding in step b) and the mixing in step c) are carried out at least partially as conching.

12. Method according to claim 11, **characterized in that** step b) and/or step c) are carried out at a temperature in the range of 35°C to 40°C.

13. Method according to claim 11 or 12, **characterized in that** in step c) milk powder and/or natural vanilla flavoring are also mixed.

14. Method according to any of claims 11 to 13, **characterized in that** after step c), the chocolate is tempered, shaped, and/or cooled.

## Revendications

1. Chocolat sans sucre raffiné, comprenant
i. pâte de cacao,
ii. graisse,
iii. poudre de dattes,
iv. poudre de bananes lyophilisées, d'ananas lyophilisés et de pommes lyophilisées, la poudre de bananes lyophilisées, d'ananas lyophilisés et de pommes lyophilisées ayant ensemble une teneur comprise entre 0,3 % en poids et 30 % en poids par rapport à la masse totale du chocolat.

2. Chocolat selon la revendication 1, **caractérisé en ce que** le chocolat est du chocolat blanc, du chocolat au lait ou du chocolat noir.

3. Chocolat selon la revendication 1 ou 2, **caractérisé en ce que** le chocolat contient 12 % à 80 % en poids de pâte de cacao non sucrée, 5 % à 40 % en poids de beurre de cacao, 0,1 % à 24 % en poids de poudre de dattes, 0,1 % à 10 % en poids de poudre de banane lyophilisée, 0,1 % à 10 % en poids de poudre d'ananas lyophilisée et 0,1 % à 10 % en poids de poudre de pomme lyophilisée par rapport à la masse totale du chocolat.

4. Chocolat selon l'une des revendications 1 à 3, **caractérisé en ce que** le chocolat contient 25 % à 80 % en poids de pâte de cacao non sucrée, 5 % à 35 % en poids de beurre de cacao, 0,1 % à 24 % en poids de poudre de dattes, 0,1 % à 10 % en poids de poudre de bananes lyophilisée, 0,1 % à 10 % en poids de poudre d'ananas lyophilisée et 0,1 % à 10 % en poids de poudre de pomme lyophilisée par rapport à la masse totale du chocolat.

5. Chocolat selon la revendication 1 ou 2, **caractérisé en ce que** le chocolat contient 52,55 % à 64,23 % en poids de pâte de cacao non sucrée, 19,71 % à 24,09 % en poids de beurre de cacao, 7,88 % à 9,64 % en poids de poudre de dattes et 9,85 % à 12,04 % en poids d'une combinaison de poudre de bananes lyophilisées, d'ananas lyophilisés et de pommes lyophilisées par rapport à la masse totale du chocolat.

6. Chocolat selon l'une des revendications 1 à 5, **caractérisé en ce que** le chocolat contient 58,39 % en poids de pâte de cacao non sucrée, 21,90 % en poids de beurre de cacao, 8,76 % en poids de poudre de dattes et 10,95 % en poids d'un mélange de poudre de bananes lyophilisée, de poudre d'ananas lyophilisée et de poudre de pommes lyophilisée par rapport à la masse totale du chocolat.

7. Chocolat selon l'une des revendications 1 à 6, **caractérisé en ce que** le chocolat contient 58,39 % en poids de pâte de cacao non sucrée, 21,90 % en poids de beurre de cacao, 8,76 % en poids de poudre de dattes, 3,65 % en poids de poudre de bananes lyophilisée, 3,65 % en poids de poudre d'ananas lyophilisée et 3,65 % en poids de poudre de pomme lyophilisée par rapport à la masse totale du chocolat.

8. Chocolat selon l'une des revendications 1 à 4, **caractérisé en ce que** le chocolat contient 44 % en poids de pâte de cacao non sucrée, 17 % en poids de beurre de cacao, 9 % en poids de poudre de dattes et 10 % en poids de poudre de banane lyophilisée, 10 % en poids de poudre d'ananas lyophilisée et 10 % en poids de poudre de pomme lyophilisée par rapport à la masse totale du chocolat.

9. Chocolat selon l'une des revendications 1 à 4, comprenant en outre du lait en poudre et/ou de l'arôme naturel de vanille.

10. Chocolat selon l'une des revendications 1 à 4 ou 9, **caractérisé en ce que** le chocolat contient 12 % à 25 % en poids de pâte de cacao non sucrée, 5 % à 40 % en poids de beurre de cacao, 7 % à 24 % en poids de poudre de dattes, 3 % à 10 % en poids de poudre de bananes lyophilisée, 3 % à 10 % en poids de poudre d'ananas lyophilisée, 3 % en poids à 10 % en poids de poudre de pomme lyophilisée, 7 % en poids à 20 % en poids de lait en poudre et 0 % en poids à 1 % en poids d'arôme naturel de vanille par rapport à la masse totale du chocolat.

11. Procédé de fabrication d'un chocolat selon l'une des revendications 1 à 10, comprenant les étapes suivantes :
a) fournir de la pâte de cacao, de la graisse, des dattes séchées en poudre, de l'ananas lyophilisé en poudre, de la pomme lyophilisée en poudre et de la banane lyophilisée en poudre,
b) broyer la pâte de cacao avec la graisse, et
c) mélanger les dattes séchées en poudre, l'ananas lyophilisé en poudre, la pomme lyophilisée en poudre et les bananes lyophilisées en poudre avec la pâte de cacao,
le broyage de l'étape b) et le mélange de l'étape c) étant effectués au moins en partie sous forme de conchage.

12. Procédé selon la revendication 11, **caractérisé en ce que** l'étape b) et/ou l'étape c) sont réalisées à une température comprise entre 35 °C et 40 °C.

13. Procédé selon la revendication 11 ou 12, **caractérisé en ce que**, à l'étape c), on mélange en outre du lait en poudre et/ou de l'arôme naturel de vanille.

14. Procédé selon l'une des revendications 11 à 13, **caractérisé en ce qu'**après l'étape c), on procède à un tempérage, un moulage et/ou un refroidissement du chocolat.
